# EUROPÄISCHE PATENTSCHRIFT

(11) **EP 1 231 700 B1**
(45) Veröffentlichungstag und Bekanntmachung des Hinweises auf die Patenterteilung: **15.06.2005**
(21) Anmeldenummer: 02000510.4
(22) Anmeldetag: 09.01.2002
(51) Int. Cl.: H02K 7/116

(54) **Elektrischer Stellantrieb, insbesondere für Heizungs-, Lüftungs- oder Klimaklappen in einem Kraftfahrzeug**
Electrical actuator especially for heating, cooling or air conditioning shutters in a vehicle
Actionneur électrique notamment pour les clapets de chauffage, de refroidissement ou de climatisation dans un vehicule

(30) Priorität: 20.01.2001 DE 10102516
(43) Veröffentlichungstag der Anmeldung: 14.08.2002
(73) Patentinhaber: Hella KGaA Hueck & Co., 59552 Lippstadt (DE)
(72) Erfinder: Bücker, Bodo, 59821 Arnsberg (DE); Stebner, Volkmar, 33142 Büren (DE)

(56) Entgegenhaltungen:
- EP-A- 0 681 359
- DE-A- 4 324 912
- DE-C- 19 752 672
- US-A- 5 574 253

## Beschreibung

Die Erfindung bezieht sich auf einen elektrischen Stellantrieb, insbesondere für Heizungs-, Lüftungs- oder Klimaklappen in einem Kraftfahrzeug. Ein derartiger Stellantrieb besteht aus einem zweiteiligen Gehäuse aus einem Gehäuseunterteil und einem Gehäuseoberteil, einem in dem Gehäuse angeordneten elektrischen Antriebsmotor mit Antriebswelle und einem in dem Gehäuse angeordneten, mit der Antriebswelle gekoppelten Getriebe.

Ein solcher Stellantrieb ist aus der EP 0681 359 A1 bekannt. Dabei wird der Antriebsmotor mit seinen Lagerschilden in Schnappaufnahmen des Gehäuseunterteils gehalten und gelagert. Diese Schnappaufnahmen weisen einen in Richtungder Aufnahme des Lagerschildes verjüngt verlaufenden, aufspreitzbaren Einstecktrichter auf, der aus zwei an die eigentliche Lagerschild-Aufnahme angeformten Zungen gebildet wird. Die Antriebswelle weist eine Antriebsschnecke auf, die mit einem Schneckenrad des Getriebes in Eingriff steht. Da die Lagerschilde der eingesetzten Antriebsmotoren hinsichtlich ihrer Außenabmessungen, insbesondere hinsichtlich ihres Durchmessers innerhalb einer gewissen Streubreite liegen, ist die Lage der Antriebsachse innerhalb des Gehäuses und damit der Eingriff der Verzahnung zwischen der Antriebsschnecke und dem getriebeseitigen Schneckenrad nicht exakt definiert. Dies bewirkt in nachteiliger Weise einen erhöhten Verschleiß an der Antriebsschnecke und an dem Schneckenrad sowie eine erhöhte Geräuschentwicklung.

Aus DE 43 24 912 A1 ist ein Stellantrieb bekannt, bei dem die Lagerschilder zur Geräuschdämpfung über Elastomerpuffer in Aufnahmen gehalten sind.

Aufgabe der Erfindung ist es daher einen Stellantrieb zu entwickeln, bei dem in einfacher und zuverlässiger Weise ein exakte Positionierung des Antriebsmotors innerhalb des Gehäuses ermöglicht wird, insbesondere dann, wenn die Außenabmessungen der Lagerschilde der Antriebsmotoren einer gewissen Streuung unterliegen.

Diese Aufgabe wird erfindungsgemäß mit einem Stellantrieb nach dem Anspruch 1 gelöst. Lagerschilde mit herstellungsbedingt etwas unterschiedlichen Durchmessern tauchen dann unterschiedlich tief in die verjüngt ausgebildete, symmetrische Aufnahme ein, wobei sie auf den Aufnahmeschenkeln zur Auflage kommen. Der Abstand des Lagerschild-Mittelpunktes und damit der Antriebswelle zu einer Zahnrad-Drehachse des Getriebes als Bezugsgröße ist jedoch immer der gleiche. Vorzugsweise ist sowohl für das vordere als auch für das hintere Lagerschild des Antriebsmotors eine erfindungsgemäße Aufnahme vorgesehen. Es ist jedoch auch vorgesehen, nur für eines der beiden Lagerschilde eine erfindungsgemäße Aufnahme auszubilden, wobei auch in diesem Fall im Vergleich zum Stand der Technik immer noch eine genauere Positionierung der Antriebswelle gewährleistet wird.

In einer bevorzugten Ausführungsform der Erfindung ist/sind die verjüngt ausgebildete(n) Aufnahme(n) für das/die Lagerschild(e) zumindest in einem Teilbereich V-förmig ausgebildet, wobei die beiden Aufnahmeschenkel V-förmig zueinander angeordnet sind.

Das Gehäuseoberteil ist vorzugsweise so ausgebildet, das dasselbe im zusammengebauten Zustand des Gehäuses (Ober- und Unterteil sind z.B. über eine Rastverbindung miteinander verbunden) in der Weise gegen das Antriebsmotor-Gehäuse und/oder gegen mindestens eines der Lagerschilde drückt, so dass das Lagerschild gegen die Aufnahmeschenkel gedrückt wird. Die verjüngten Aufnahmen sind dabei so massiv und nicht federnd ausgebildet, dass infolge des Andrucks durch das Gehäuseoberteil auf das Antriebsmotor-Gehäuse die Lagerschilde in einer Position fest in die Aufnahmen gedrückt werden, wodurch die Antriebsmotorwelle in allen Betriebsbedingungen in der definierten Lage gehalten wird. Darüber hinaus bewirkt der Andruck des Gehäuseoberteils auf das Antriebsmotor-Gehäuse (Motormantel), dass das Antriebsmotor-Gehäuse reibschlüssig axial verschiebesicher über seine Lagerschilde in den Aufnahmen gehalten ist.

Um ein Verdrehen des Antriebsmotors gegenüber dem Gehäuse des Stellantriebs zu verhindern, weist das weist eine der beiden Gehäuseteile, vorzugsweise ebenfalls das Gehäuseunterteil, eine Nase auf, die in eine Aussparung des Antriebsmotor-Gehäuses als Drehmomentabstützung eingreift.

Zum Anpressen des Antriebsmotor-Gehäuses weist das Gehäuseoberteil vorzugsweise ein Anpresselemente-Paar auf, wobei die beiden Anpresselemente beabstandet zu beiden Seiten der Antriebsmotor-Längsachse angeordnet sind und im zusammengebauten Zustand des Gehäuses federelastisch gegen das Antriebsmotor-Gehäuse drücken. Durch die federelastische Ausbildung der Anpresselemente wird in einfacher und zuverlässiger Weise eine Verbindung zwischen Gehäuseoberteil und Gehäuseunterteil über eine Rastverbindung ermöglicht. Zum Zusammenbau des Gehäuses wird das Gehäuseoberteil auf das Gehäuseunterteil aufgesetzt und die beiden Gehäuseteile mit zusammengedrückt. Dabei spreitzen sich die Anpresselemente solange bis die Rastarme am Gehäuseoberteil über die Rastnasen am Gehäuseunterteil gedrückt sind und die Rastnasen in die Rastarme einrasten. Über die sich gegenüber dem Antriebsmotor abstützenden Anpresselemente werden im zusammengebauten Zustand einerseits die beiden Gehäuseteile unter Spannung zusammengehalten und andererseits wird der Antriebsmotor über die Anpresselemente in die Aufnahmen gedrückt. Die Anpresselemente ermöglichen das "Überdrücken" des Gehäuseoberteils, um das Einrasten zu bewirken.

In dem unteren Gehäuseteil ist vorzugsweise ein Anschlags-Paar vorgesehen, wobei ein erster Anschlag die Verschiebung des hinteren Lagerschilds oder der Rückwand des Antriebsmotors begrenzt, während ein zweiter Anschlag die Verschiebung der Antriebswellen-Spitze begrenzt. Auf diese Weise wird das Axialspiel der Antriebswelle gegenüber dem Antriebsmotor-Gehäuse, das bei den verwendeten Antriebsmotoren besteht, wirksam begrenzt. Dies ist von Vorteil, da das Axialspiel bei Lastwechseln und Drehrichtungswechseln zu störenden Geräuschen und unterschiedlichen Motorwirkungsgraden führt. Dabei geht die Begrenzung des Axialspiels allerdings nur soweit, dass eine ungehinderte Drehung der Antriebswelle gewährleistet ist, d.h. die Antriebswellenspitze dreht sich zumindest fast reibungsfrei gegenüber dem ihr zugeordneten Anschlag.

Die beiden Gehäuseteile sind vorzugsweise aus Kunststoff im Spritzgießverfahren hergestellt. Dabei wird das Gehäuseunterteil vorzugsweise einstückig mit den verjüngten Aufnahmen für die Lagerschilde und das Gehäuseoberteil einstückig mit den Anpresselementen hergestellt. Da die erfindungsgemäßen Aufnahmen für die Lagerschilde und die Anpresselemente im Vergleich zu den aus dem Stand der Technik bekannten Schnappaufnahmen keine Hinterschnitte aufweisen, lassen sie sich spritzgusstechnisch wesentlich leichter herstellen.

In vorteilhafter Weise wird das Gehäuseunterteil einstückig mit dem Anschlags-Paar zur Axialspielbegrenzung und der Nase zur Drehmomentabstützung hergestellt. Ebenso werden in vorteilhafter Weise die Rastarme sowie die Rastnasen einstückig mit den entsprechenden Gehäuseteilen hergestellt.
Im zusammengebauten Zustand des Gehäuses ist die Einbaulage des Stellantriebs beliebig, so dass dort die Bezeichnung Gehäuseunterteil bzw. Gehäuseoberteil ihre Bedeutung verliert und somit letztlich willkürlich gewählt ist. Man könnte in einer Verallgemeinerung genauso von einer ersten und einer zweiten Gehäusehälfte sprechen. Da es jedoch im Zusammenhang mit der Bestückung/Montage sinnvoll ist die Gehäusehälfte, in die der Antriebsmotor und die Getriebezahnräder eingelegt werden, als Gehäuseunterteil zu bezeichnen, wurde diese Bezeichnung durchgehend gewählt. Außerdem ist immer dann, wenn von Antriebsmotor die Rede ist auch das Antriebsmotor-Gehäuse gemeint.

Anhand der beigefügten Zeichnungen soll die Erfindung näher erläutert werden. Es zeigt:
- Figur 1: eine Draufsicht auf das Gehäuse im geschlossenen, zusammengebauten Zustand,
- Figur 2: einen Schnitt durch das Gehäuse entlang der Linie D-D,
- Figur 3: einen Schnitt durch das Gehäuse entlang der Linie E-E,
- Figur 4: einen Schnitt durch das Gehäuse entlang der Linie F- F,
- Figur 5: einen Schnitt durch das Gehäuse entlang der Linie G-G,
- Figur 6: eine schematische Darstellung der Lagerung des Antriebsmotors in der verjüngten Aufnahme,
- Figur 7: eine schematische Darstellung der Lagerung des Antriebsmotors in der V-förmigen Aufnahme zur Verdeutlichung der geometrischen Verhältnisse.

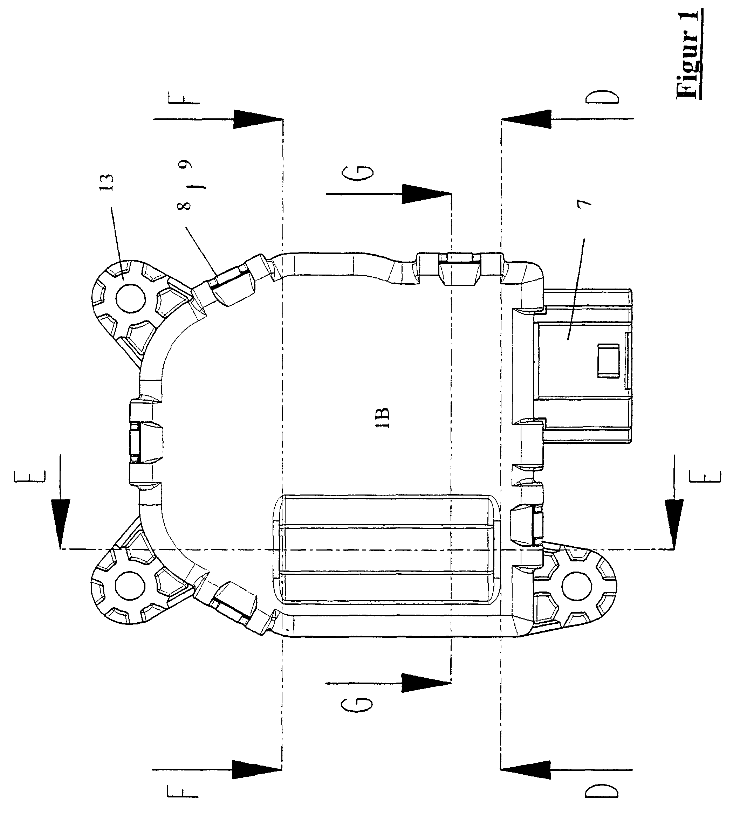

Figur 1 zeigt eine Draufsicht auf den aus zwei Gehäuseteilen (1A, 1B) bestehenden Stellantrieb. Zu erkennen sind: die Oberseite des Gehäuseoberteils (1B), Befestigungsaugen (13), die am Gehäuseunterteil (1A) angeordnet sind, Rastarme (8) am Gehäuseoberteil (1B), die mit Rastnasen (9) am Gehäuseunterteil (1A) zusammenwirken und ein elektrisches Steckverbindungselement (7), das der Verbindung einer im dem Gehäuse (1) angeordneten Schaltungsanordnung mit einem Anschlusskabel dient. Im zusammengebauten Zustand werden die beiden Gehäuseteile (1A, 1B) über die Rastverbindung zwischen den Rastarmen (8) und den Rastnasen (9) zusammengehalten. Beide Gehäuseteile (1A, 1B) sind einstückig im Spritzgießverfahren aus Kunststoff hergestellt. Dabei werden im Gehäuseunterteil (1A) Metallstifte (nicht dargestellt) als Drehachsen für Getriebezahnräder als Einlegeteile mitumspritzt oder in das Gehäuse eingepresst.
Im Gehäuseunterteil (1A) sind der Antriebsmotor (2) mit Antriebswelle (2A) sowie ein mit der Antriebswelle (2A) gekoppeltes Getriebe (nicht dargestellt) angeordnet. Dabei weist die Antriebswelle (2a) eine Antriebsschnecke (2B), die mit einem Schneckerad des Getriebes in Eingriff steht, auf. Über weitere Zahnräder wird schließlich eine Antriebswelle angetrieben, über die dann Heizung-, Lüftungs- oder Klimaklappen in einem Kraftfahrzeug verstellt werden. Darüber hinaus befindet sich in dem Gehäuseunterteil (1A) eine Platine (nicht dargestellt) zur Ansteuerung des Antriebsmotors (2) und/oder zur Positionserkennung der Winkellage der Abtriebswelle. Der Antriebsmotor (2), die Getriebezahnräder und die Platine sind positionsgenau herausnehmbar in das Gehäuseunterteil (1A) eingelegt. Fixiert werden sie durch das Gehäuseoberteil (1B) im zusammengebauten Zustand. Nach dem Öffnen des Gehäuses (1) lassen sich sämtliche Komponenten wieder entfernen. Der Stellantrieb ist nach einem Baukastenprinzip aufgebaut.

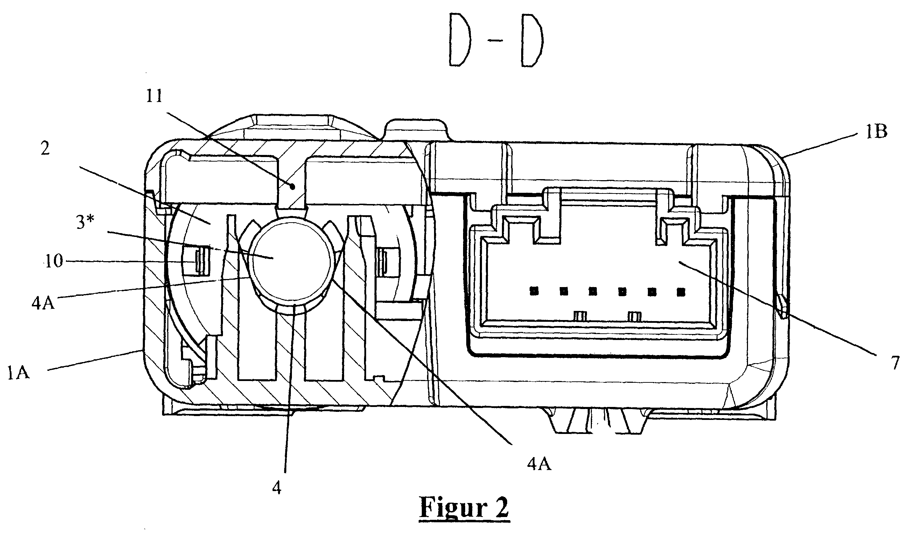

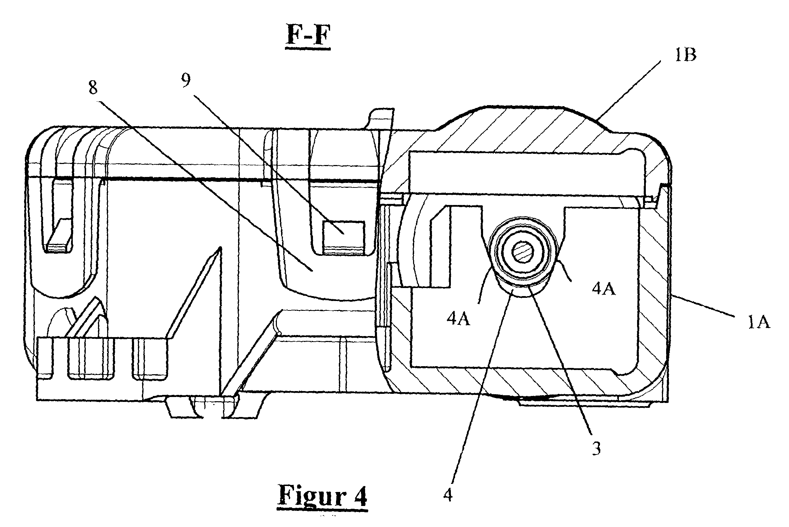

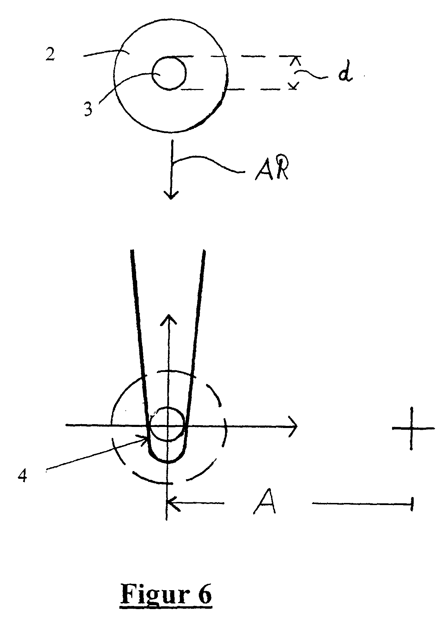

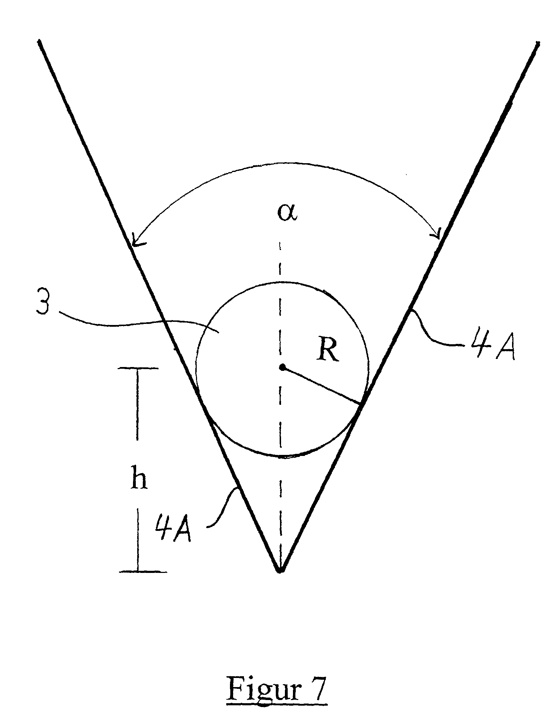

In Figur 2 ist ein Schnitt (D-D) durch das Gehäuse (1) im Bereich des hinteren (der Antriebswelle abgewandten Seite) Lagerschildes (3*) des Antriebsmotors (2) gezeigt. In Figur 4 ist ein Schnitt (F-F) durch das Gehäuse (1) im Bereich des vorderen Lagerschildes (3) gezeigt. Dabei weist das Gehäuseunterteil (1A) jeweils eine verjüngt ausgebildete Aufnahme (4) für das vordere und hintere Lagerschild (3, 3*) des Antriebsmotors (2) mit zwei symmetrisch zur Aufnahmerichtung (AR) - siehe Figur 6 und 7 - verlaufenden Aufnahmeschenkeln (4A) auf. Im zusammengebauten Zustand stützen sich die Lagerschilde (3, 3*) auf den beiden Aufnahmeschenkeln (4A) ab. Dabei sind die beiden verjüngt ausgebildeten Aufnahmen (4A) zumindest in einem Teilbereich V-förmig ausgebildet. Lagerschilde (3, 3*) mit herstellungsbedingt etwas unterschiedlichen Durchmessern (d) tauchen dann unterschiedlich tief in die verjüngt ausgebildete, symmetrische Aufnahme (4) ein, wobei sie auf den Aufnahmeschenkeln (4A) zur Auflage kommen. Der Abstand (A) des Lagerschild-Mittelpunktes und damit der Antriebswelle (2A) zu einer Zahnrad-Drehachse des Getriebes als Bezugsgröße ist jedoch immer der gleiche. Die geringfügig unterschiedliche Einbauhöhe (h) der Antriebsmotoren (2) aufgrund der unterschiedlichen "Eintauchtiefe" bei verschiedenen Lagerschildradien (R) ist für eine verschleißarme Verzahnung zwischen der Antriebsschnecke (2B) und dem Schneckenrad nicht kritisch.

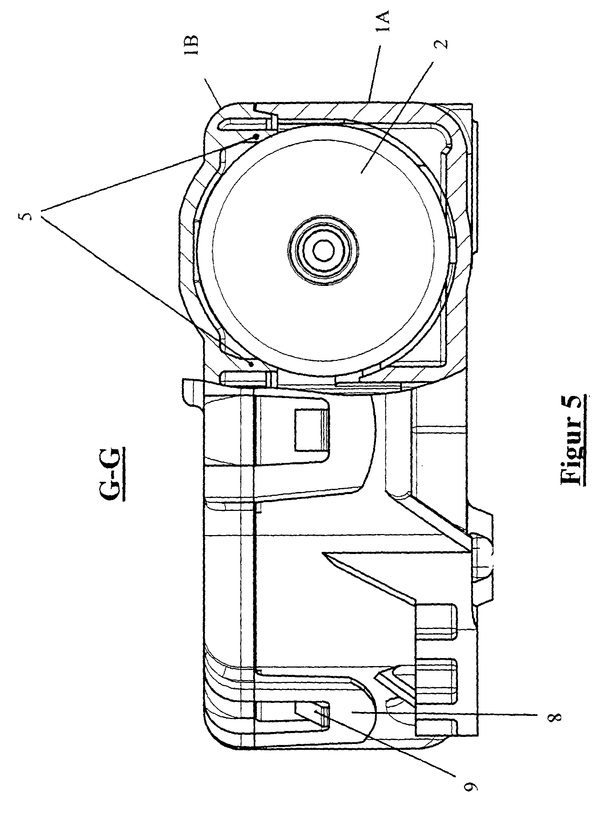

Um die Lagerschilde (3, 3*) des Antriebsmotors (2) im zusammengebauten Zustand gegen die Aufnahmeschenkel (4A) zu drücken, weist das Gehäuseoberteil (1B) zwei im Abstand entlang der Motorlängsachse hintereinander angeordnete Anpresselemente-Paare auf, deren Anpresselemente (5) jeweils beabstandet zu beiden Seiten der Motorlängsachse angeordnet sind und im zusammengebauten Zustand federelastisch gegen den Antriebsmotor, d.h. gegen den Mantel des Antriebsmotor-Gehäuses drücken - siehe Figur 5.

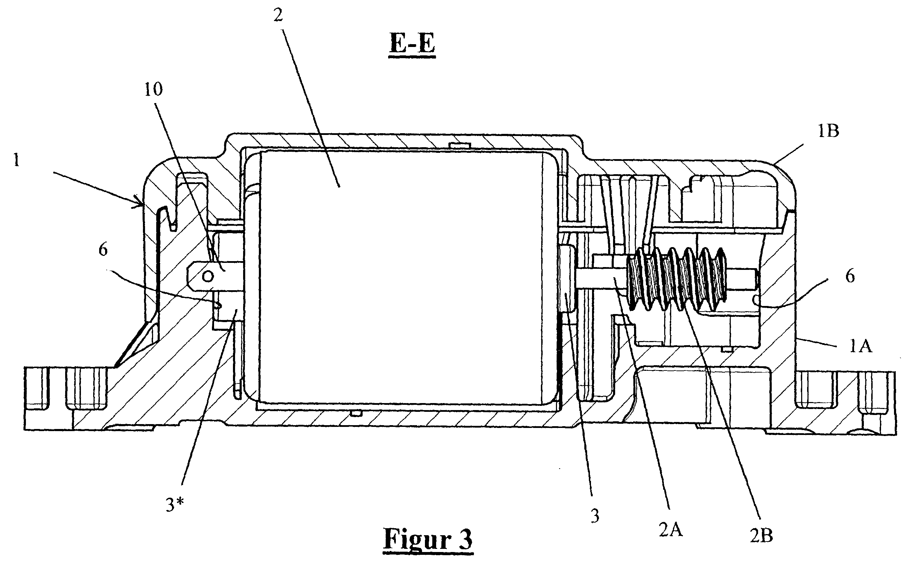

Um das Axialspiel der Antriebswelle (2A) gegenüber dem Antriebsmotor (2) zu begrenzen, ist ein Anschlagsbegrenzungs-Paar (6) vorgesehen (siehe Figur 3), wobei ein erster Anschlag die Verschiebung des hinteren Lagerschildes begrenzt und ein zweiter Anschlag die Verschiebung der Antriebswellenspitze begrenzt.

In Figur 3 ist die auf der Antriebswelle (2A) angeordnete Antriebsschnecke (2B) zu sehen. Außerdem ist in Figur 3 eine der beiden Kontaktierfahnen (10) des Antriebsmotors (2) zu erkennen, mit der der Antriebsmotor an die Platine elektrisch angeschlossen ist. In Figur 2 ist noch ein Justagestift (11) zu erkennen, der für einen einfachen und zuverlässigen Zusammenbau der beiden Gehäuseteile (1A, 1B) benötigt wird.

Zur Aufnahme des Antriebsmotors weisen sowohl das Gehäuseoberteil als auch das Gehäuseunterteil jeweils eine nach außen weisende Wölbung auf.

### Bezugszeichenliste

- 1): Gehäuse des Stellantriebs
- 1A): Gehäuseunterteil
- 1B): Gehäuseoberteil
- 2): Antriebsmotor
- 2A): Antriebswelle
- 2B): Antriebsschnecke
- 3): Vorderes Lagerschild
- 3*): Hinteres Lagerschild
- 4): Verjüngte Aufnahmen für die Lagerschilde
- 4A): Aufnahmeschenkel
- 5): Anpresselemente am Gehäuseoberteil
- 6): Anschläge am Gehäuseunterteil zur Begrenzung des Axialspiels
- 7): Elektrisches Steckverbindungselement
- 8): Rastarm am Gehäuseoberteil
- 9): Rastnase am Gehäuseunterteil
- 10): Kontaktfahne für den Antriebsmotor
- 11): Justagestift
- 13): Befestigungsauge

## Patentansprüche

1. Elektrischer Stellantrieb, insbesondere für Heizungs-, Lüftungs- oder Klimaklappen in einem Kraftfahrzeug bestehend aus
- einem zweiteiligen Gehäuse (1) aus einem Gehäuseunterteil (1A) und einem Gehäuseoberteil (1B),
- einem in dem Gehäuse (1) angeordneten elektrischen Antriebsmotor (2) mit Antriebswelle (2A),
- einem in dem Gehäuse (1) angeordneten, mit der Antriebswelle (2A) gekoppelten Getriebe,
wobei eines der beiden Gehäuseteile (1A, 1B) mindestens eine aus zwei Aufnahmeschenkeln (4A) gebildete Aufnahme (4) für ein Lagerschild (3, 3*) des Antriebsmotors (2) aufweist,
wobei das Lagerschild (3, 3*) in Richtung einer Aufnahmerichtung (AR) in die Aufnahme (4) eingeführt wird, um in der Aufnahme (4) aufgenommen zu werden,
wobei die Aufnahmeschenkel (4A) derart symmetrisch zur Aufnahmerichtung (AR) verlaufen, dass die Aufnahme (4) in Aufnahmerichtung (AR) verjüngt ausgebildet ist,
**dadurch gekennzeichnet,**
**dass** sich das in der Aufnahme (4) befindliche Lagerschild (3, 3*) gegen das eine Gehäuseteil (1A, 1B) ausschließlich auf den beiden Aufnahmeschenkeln (4A) der Aufnahme (4) abstützt.

2. Elektrischer Stellantrieb nach Anspruch 1,
**dadurch gekennzeichnet, dass**
die verjüngt ausgebildete Aufnahme (4) für das Lagerschild (3, 3*) des Antriebsmotors (2) zumindest in einem Teilbereich V-förmig ausgebildet ist.

3. Elektrischer Stellantrieb nach Anspruch 1 oder 2,
**dadurch gekennzeichnet, dass**
das Gehäuseoberteil (1B) so ausgebildet ist, dass dasselbe im zusammengebauten Zustand des Gehäuses (1) in der Weise gegen das Antriebsmotor-Gehäuse (2) und/oder gegen mindestens eines der Lagerschilde (3, 3*) drückt, dass das Lagerschild (3, 3*) gegen die Aufnahmeschenkel (4A) gedrückt wird.

4. Elektrischer Stellantrieb nach Anspruch 3,
**dadurch gekennzeichnet, dass**
das Gehäuseoberteil (1B) mindestens ein Anpresselemente-Paar aufweist, wobei die beiden Anpresselemente (5) beabstandet zu beiden Seiten der Antriebsmotor-Längsachse (2A) angeordnet sind und im zusammengebauten Zustand des Gehäuses (1) federelastisch gegen das Antriebsmotor-Gehäuse (2) drücken.

5. Elektrischer Antrieb nach einem der vorstehenden Ansprüche,
**dadurch gekennzeichnet, dass**
die beiden Gehäusehälften (1A, 1B) über Rastverbindungen (8, 9) zusammengehalten werden.

6. Elektrischer Antrieb nach einem der vorstehenden Ansprüche,
**dadurch gekennzeichnet, dass**
in dem unteren Gehäuseteil (1A) ein Anschlags-Paar (6) zur Begrenzung des axialen Spiels der Antriebswelle (2A) gegenüber dem Antriebsmotor-Gehäuse (2) vorgesehen ist, wobei ein erster Anschlag die Verschiebung des hinteren Lagerschilds (3) oder der Rückwand des Antriebsmotor-Gehäuses begrenzt und ein zweiter Anschlag die Verschiebung der Antriebswellen-Spitze begrenzt.

7. Elektrischer Antrieb nach einem der vorstehenden Ansprüche,
**dadurch gekennzeichnet, dass**
eine der beiden Gehäusehälften (1A, 1B) eine Nase aufweist, die in eine Aussparung am Antriebsmotor-Gehäuse (2) eingreift, um ein Verdrehen des Antriebsmotors gegenüber dem Gehäuse (1) zu verhindern.

8. Elektrischer Antrieb nach einem der vorstehenden Ansprüche,
**dadurch gekennzeichnet, dass**
das Gehäuseunterteil (1A) aus Kunststoff einstückig mit der Aufnahme für das Lagerschild ausgebildet ist.

9. Elektrischer Antrieb nach einem der vorstehenden Ansprüche,
**dadurch gekennzeichnet, dass** das Gehäuseunterteil (1A) einstückig mit dem Anschlags-Paar (6) hergestellt ist.

10. Elektrischer Antrieb nach einem der vorstehenden Ansprüche,
**dadurch gekennzeichnet, dass**
das Gehäuseunterteil (1A) einstückig mit der Nase ausgebildet ist.

11. Elektrischer Antrieb nach einem der vorstehenden Ansprüche,
**dadurch gekennzeichnet, dass**
das Gehäuseoberteil (1B) aus Kunststoff einstückig mit dem Anpresselemente-Paar (5) hergestellt ist.

## Claims

1. An electric actuator, especially for heater, ventilation or air-conditioning flaps in a motor vehicle, comprising:
- a two-part housing (1) consisting of a lower portion (1A) and an upper portion (1B),
- an electric driving motor (2) with driving shaft (2A) disposed in the housing (1),
- a gear disposed in the housing (1) and coupled with the driving shaft (2A),
wherein one of the two portions (1A, 1B) of the housing has at least one holder (4) comprising two side-pieces for accommodating an end plate (3, 3*) of the driving motor (2),
wherein the end plate (3, 3*) is guided into the holder (4) in the direction (AR) so as to be seated in the holder (4),
wherein the side-pieces (4A) extend so as to be symmetrical with respect to the seating direction (AR) in such a way that the holder (4) is formed so as to be tapered in the seating direction (AR),
**characterized in that**
the end plate (3, 3*) located in the holder (4) rests against one portion (1A, 1B) of the housing solely on the two side-pieces (4A) of the holder (4).

2. An electric actuator according to Claim 1,
**characterized in that,**
at least in one region, the tapered holder (4) for the end plate (3, 3*) of the driving motor (2) is V-shaped.

3. An electric actuator according to Claim 1 or 2,
**characterized in that**
the upper portion (1B) of the housing is formed so that, in the assembled state of the housing (1), said upper portion (1B) presses against the housing (2) of the driving motor and/or against at least one of the end plates (3, 3*) in such a way that the end plate (3, 3*) is pressed against the side-pieces (4A).

4. An electric actuator according to Claim 3,
**characterized in that**
the upper portion (1B) of the housing has at least one pair of pressure elements (5), in which case the two pressure elements (5) are disposed at a distance from the two sides of the longitudinal axis (2A) of the driving motor and, in the assembled state of the housing (1), press resiliently against the housing (2) of the driving motor.

5. An electric actuator according to one of the preceding claims,
**characterized in that**
the two halves (1A, 1B) of the housing are held together by way of snap-in connections (8, 9).

6. An electric actuator according to one of the preceding claims,
**characterized in that**,
in the lower portion (1A) of the housing, a pair of limit stops (6) is provided for limiting the axial play of the driving shaft (2A) relative to the housing (2) of the driving motor, a first stop limiting displacement of the rear end plate (3) or rear wall of the housing of the driving motor, and a second stop limiting displacement of the end of the driving shaft.

7. An electric actuator according to one of the preceding claims,
**characterized in that**
one of the two halves (1A, 1B) of the housing has a lug, which engages in a recess in the housing (2) of the driving motor so as to prevent twisting of the driving motor relative to the housing (1).

8. An electric actuator according to one of the preceding claims,
**characterized in that**
the lower portion (1A) of the housing is made of a plastic material and is formed in one piece with the holder for the end plate.

9. An electric actuator according to one of the preceding claims,
**characterized in that**
the lower portion (1A) of the housing is made in one piece with the pair of stops (6).

10. An electric actuator according to one of the preceding claims,
**characterized in that**
the lower portion (1A) of the housing is formed in one piece with the lug.

11. An electric actuator according to one of the preceding claims,
**characterized in that**
the upper portion (1B) of the housing is made of a plastic material and is formed in one piece with the pair of pressure elements (5).

## Revendications

1. Actionneur électrique, en particulier pour clapets de chauffage, d'aération ou de climatisation dans un véhicule, constitué par
- un boîtier (1) en deux parties formé par une partie inférieure de boîtier (1A) et une partie supérieure de boîtier (1B),
- un moteur d'entraînement électrique (2) agencé dans le boîtier (1) avec un arbre d'entraînement (2A),
- une transmission agencée dans le boîtier (1) et accouplée à l'arbre d'entraînement (2A),
dans lequel une des deux parties de boîtier (1A, 1B) présente au moins un logement (4) formé à partir de deux branches de réception (4A) pour un flasque de montage (3, 3*) du moteur d'entraînement (2), le flasque (3, 3*) étant introduit dans un logement (4) dans le sens d'une direction de réception (AR), pour être reçu dans le logement (4),
dans lequel les branches de réception (4A) s'étendent symétriquement à la direction de réception (AR) de telle sorte que le logement (4) est réalisé en rétrécissement en direction de réception (AR),
**caractérisé en ce que** le flasque (3, 3*) se trouvant dans le logement prend appui contre ladite une partie de boîtier (1A, 1B) exclusivement sur les deux branches de réception (4A) du logement (4).

2. Actionneur électrique selon la revendication 1, **caractérisé en ce que** le logement (4) réalisé en rétrécissement pour le flasque (3, 3*) du moteur d'entraînement (2) est réalisé en forme de V au moins dans une région partielle.

3. Actionneur électrique selon l'une ou l'autre des revendications 1 et 2, **caractérisé en ce que** la partie supérieure de boîtier (1B) est réalisée de telle sorte qu'à l'état assemblé du boîtier (1), celle-ci appuie contre le boîtier (2) du moteur d'entraînement et/ou contre au moins un desdits flasques (3, 3*) de telle sorte que le flasque (3, 3*) est pressé contre les branches de réception (4A).

4. Actionneur électrique selon la revendication 3, **caractérisé en ce que** la partie supérieure de boîtier (1B) présente au moins une paire d'éléments de pressage, les deux éléments de pressage (5) étant agencés à distance des deux côtés de l'axe longitudinal (2A) du moteur d'entraînement et, à l'état assemblé du boîtier (1), ceux-ci pressant contre le boîtier (2) du moteur d'entraînement à la manière d'un ressort.

5. Actionneur électrique selon l'une des revendications précédentes, **caractérisé en ce que** les deux moitiés de boîtier (1A, 1B) sont maintenues ensemble par des liaisons à enclenchement (8, 9).

6. Actionneur électrique selon l'une des revendications précédentes, **caractérisé en ce qu'**il est prévu dans la partie inférieure de boîtier (1A) une paire de butées (6) pour limiter le jeu axial de l'arbre d'entraînement (2A) par rapport au boîtier (2) du moteur d'entraînement, une première butée limitant le déplacement du flasque postérieur (3) ou de la paroi arrière du boîtier du moteur d'entraînement et une deuxième butée limitant le déplacement de la pointe de l'arbre d'entraînement.

7. Actionneur électrique selon l'une des revendications précédentes, **caractérisé en ce qu'**une des deux moitiés de boîtier (1A, 1B) présente un ergot qui s'engage dans un évidement sur le boîtier (2) du moteur d'entraînement pour empêcher une rotation du moteur d'entraînement par rapport au boîtier (1).

8. Actionneur électrique selon l'une des revendications précédentes, **caractérisé en ce que** la partie inférieure de boîtier (1A) est réalisée en matière plastique d'un seul tenant avec le logement pour le flasque.

9. Actionneur électrique selon l'une des revendications précédentes, **caractérisé en ce que** la partie inférieure de boîtier (1A) est fabriquée d'un seul tenant avec la paire de butées (6).

10. Actionneur électrique selon l'une des revendications précédentes, **caractérisé en ce que** la partie inférieure de boîtier (1A) est réalisée d'un seul tenant avec l'ergot.

11. Actionneur électrique selon l'une des revendications précédentes, **caractérisé en ce que** la partie supérieure de boîtier (1B) est fabriquée en matière plastique d'un seul tenant avec la paire d'éléments de pressage (5).
